# FASCICULE DE BREVET EUROPEEN

(11) **EP 2 483 654 B1**
(45) Date de publication et mention de la délivrance du brevet: **19.02.2025**
(21) Numéro de dépôt: 10778688.1
(22) Date de dépôt: 30.09.2010
(51) Int. Cl.: G01L 9/00, G01L 19/08, G01L 17/00, G01L 7/00

(54) **ORGANE DE MESURE DE PRESSION ETANCHE**
ABGEDICHTETES DRUCKMESSELEMENT
SEALED PRESSURE-MEASURING MEMBER

(30) Priorité: 30.09.2009 FR 0956796
(43) Date de publication de la demande: 08.08.2012
(60) Demande divisionnaire: 23171439.5
(73) Titulaire: Compagnie Générale des Etablissements Michelin, 63000 Clermont-Ferrand (FR)
(72) Inventeur: CHAMPREDONDE, Jonathan, E-01007 Vitoria-Gasteiz (ES); LEMAN, Richard, Kent TN2 4NW (GB); LEMAN, Mark, Kent TN24 NW (GB); SMITH, Peter, Kent TN18 4NG (GB)
(74) Mandataire: M.F.P. Michelin
(86) Numéro de dépôt international: PCT/FR2010/052071
(87) Numéro de publication internationale: WO 2011/039486

(56) Documents cités:
- EP-A1- 1 508 295
- CN-Y- 2 639 038
- US-A- 6 016 102

## Description

La présente invention concerne le domaine des capteurs de pression.

L'invention s'applique, sans s'y restreindre, à la mesure de pression d'un pneumatique, notamment de type génie civil.

On connaît de l'état de la technique, notamment de US 6,931,934, un organe de mesure de pression agencé à l'intérieur de l'espace délimité par le pneumatique et la jante. L'organe est de type passif et comprend un boîtier de protection. L'organe comprend également un corps d'épreuve et le boîtier comprend une paroi portant une surface de mesure de pression liée fonctionnellement au corps d'épreuve. En effet, cette paroi comporte un enfoncement agencé de sorte que la paroi est positionnée au contact du corps d'épreuve. Sous l'effet de la pression externe exercée sur la paroi, l'enfoncement transmet mécaniquement la pression au corps d'épreuve qui peut alors détecter la pression externe à l'organe.

Toutefois, les efforts mécaniques répétés de l'enfoncement sur le corps d'épreuve au contact de ce dernier conduisent d'une part, à une usure du corps d'épreuve ce qui altère la mesure de pression, et d'autre part, à une désolidarisation du corps d'épreuve de son support ce qui rend l'organe inutilisable.

En outre, l'organe étant de type passif, chaque organe de mesure doit être étalonné à l'issue de sa fabrication qui est donc fastidieuse et coûteuse. Il requiert aussi une mémorisation des données d'étalonnage dans une unité de traitement de l'organe. Cela augmente la complexité et le coût du système. En outre, les données d'étalonnage sont une source d'erreurs de mesure.

Il est à noter également que dans le cas où l'organe n'est pas fermé de façon complètement étanche pendant toute sa durée de vie, il n'est pas protégé des agressions chimiques, notamment de celles provenant des produits utilisés pour l'entretien des jantes et du pneumatique. Cette exposition prolongée aux agressions chimiques engendre une altération du corps d'épreuve et donc de la mesure de pression.

On connaît également du document CN2639038 un organe de mesure de pression comprenant différents organes agencés sur deux faces différentes d'un circuit imprimé et dans deux poches différentes en caoutchouc.

L'invention vise à fournir un organe de mesure de pression fiable.

A cet effet, l'invention a pour objet un organe de mesure de pression comprenant:
- une surface de mesure de pression liée fonctionnellement à un corps d'épreuve,
- un boîtier étanche de mesure de pression dans lequel est agencé le corps d'épreuve, la surface de mesure de pression étant portée par une paroi du boîtier étanche de mesure de pression s'étendant à distance du corps d'épreuve et déformable de sorte que la pression reçue par ladite paroi (104) à l'extérieur du boîtier est mesurable par le corps d'épreuve (96), le boîtier étanche de mesure de pression délimitant un espace interne au boîtier;
- des moyens de transmission de la pression entre la surface de mesure de pression et le corps d'épreuve comprenant un matériau sensiblement incompressible occupant la totalité de l'espace interne ;
- des moyens de stockage d'énergie agencés dans le boîtier étanche ;
- des moyens de traitement de la pression détectée par le corps d'épreuve agencés dans le boîtier étanche.

La surface de mesure de pression s'étendant à distance du corps d'épreuve, c'est-à-dire n'étant pas directement en contact avec le corps d'épreuve, le corps d'épreuve ne peut être usé, ni désolidarisé de son support sous l'effet des efforts répétés sur la surface de mesure de pression. En effet, le matériau sensiblement incompressible permet à la fois de protéger le corps d'épreuve et à la fois de transmettre directement la pression depuis la surface de mesure de pression jusque vers le corps d'épreuve sans que ceux-ci ne soient en contact direct. La transmission de la pression est réalisée de façon directe, c'est-à-dire que la pression s'appliquant sur la surface de mesure de pression est la pression mesurée par le corps d'épreuve. Aucun décalage de la mesure ou off-set n'est introduit par le matériau, ce qui permet notamment de s'affranchir d'un étalonnage de l'organe.

En outre, peu importe la pression du pneumatique, l'organe selon l'invention permet de mesurer des pressions pouvant aller jusqu'à 16 bars, voire 30 bars si nécessaire. En occupant la totalité de l'espace interne, on exclut la présence d'air ou d'un autre matériau, par exemple compressible, qui pourrait perturber la pression détectée par le corps d'épreuve, notamment lors de variation de températures.

En outre, le boîtier étanche selon l'invention est imperméable aux liquides, solides et gaz dans des conditions d'utilisation de l'organe à l'intérieur du pneumatique. Le corps d'épreuve est donc protégé des agressions chimiques, notamment de celles provenant des produits utilisés pour l'entretien des jantes et pneumatiques, notamment dans le domaine du génie civil. Ainsi, le corps d'épreuve ne peut être détérioré par aucun élément extérieur au boîtier car il est situé dans le boîtier étanche.

En outre, l'organe permet de mesurer la pression interne du pneumatique grâce à la surface de mesure de pression qui, en étant fonctionnellement liée au corps d'épreuve, transmet la pression jusqu'au corps d'épreuve sans que celui-ci ne soit exposé aux éléments extérieurs au boîtier. En effet, la paroi du boîtier est déformable de sorte que la pression reçue par cette paroi à l'extérieur du boîtier est mesurable par le corps d'épreuve. Un tel organe est destiné à être agencé dans l'espace délimité par le pneumatique et la jante. Il pourra être indifféremment fixé sur la jante ou sur le pneumatique.

De plus, l'organe de mesure est du type actif. Ainsi, il n'est pas nécessaire de l'étalonner. Chaque organe peut donc être fabriqué à moindres coûts et rapidement. En outre, la pression mesurée par le corps d'épreuve est transmise aux moyens de traitement qui sont alimentés de façon autonome par les moyens de stockage d'énergie. Les données sont ensuite transmises depuis les moyens de traitement vers l'extérieur de l'organe. L'organe de mesure est donc autonome, indépendant énergétiquement et capable de transmettre de façon fiable la pression mesurée.

On notera que l'incompressibilité du matériau est définie à température constante. Ainsi, un matériau incompressible peut présenter un volume variable en fonction de la température. Ainsi, la déformabilité de la paroi de mesure de pression permet d'adapter la mesure de pression aux variations de température. En effet, lorsque la température augmente ou diminue, le matériau a tendance respectivement à s'étendre ou à se rétracter. La déformabilité du diaphragme lui permet de suivre les variations de volume du matériau en fonction de la température sans altérer la mesure de pression.

Enfin, le matériau incompressible de l'organe selon l'invention permet d'éviter l'implosion du boîtier de mesure de pression par rapport à un organe comprenant boîtier ne comprenant que de l'air qui imploserait sous l'effet de la différence de pression entre l'extérieur et l'intérieur du boîtier.

De préférence, l'organe comprend des moyens de communication par radiofréquences comprenant une antenne située à l'extérieur de l'espace interne occupé par le matériau. L'antenne étant située à l'extérieur de l'espace interne, ses propriétés de rayonnement sont préservées et ne sont pas altérées par le boîtier de mesure de pression ou le matériau.

Optionnellement, le boîtier étanche de mesure de pression comporte un orifice de remplissage du boîtier destiné à être obturé par un organe d'obturation électriquement conducteur auquel est reliée l'antenne. L'organe d'obturation assure à la fois la fonction d'obturation du boîtier et de conduction du signal électrique généré à l'intérieur du boîtier vers l'antenne située à l'extérieur du boîtier.

Avantageusement, la paroi du boîtier est formée par un diaphragme déformable.

Un diaphragme présente des caractéristiques mécaniques de déformation adaptées lui permettant d'être sensible à la pression du pneumatique et à ses variations.

Avantageusement, la paroi du boîtier étanche comporte des rainures concentriques.

De préférence, les rainures concentriques sont équidistantes les unes des autres deux à deux. Préférentiellement, la paroi du boîtier étanche présente, en coupe, au moins une portion présentant un profil sensiblement sinusoïdal. Cela permet d'améliorer la linéarité de réponse du corps d'épreuve par rapport à une paroi du boîtier étanche présentant, en coupe, un profil sensiblement plan.

Optionnellement, la surface de mesure de pression est revêtue d'une pellicule métallique inerte, par exemple l'or, le palladium ou le platine.

Cette couche permet d'éviter la corrosion du diaphragme et de préserver ses caractéristiques mécaniques.

Avantageusement, l'organe comprend un support du corps d'épreuve formant une paroi du boîtier étanche, réalisé en céramique.

Le support étant réalisé en céramique, il est parfaitement étanche et inerte vis-à-vis des agressions chimiques, notamment de celles provenant des produits utilisés pour l'entretien des jantes et pneumatiques, notamment dans le domaine du génie civil. En outre, des fissures sont susceptibles d'apparaître suite aux dilatations du matériau du support consécutives aux variations de température dans le pneumatique. La céramique présentant une dilatation très faible, l'apparition et l'expansion de fissures dans le support est minimisée.

De préférence, le matériau est dans une phase liquide et/ou gel dans une plage de températures comprise entre -20°C et +150°C. Ainsi, le matériau demeure dans une phase liquide et/ou gel dans la gamme de températures de fonctionnement de l'organe et conserve, dans cette plage, ses propriétés de transmission directe de la pression depuis la surface de mesure de pression jusqu'au corps d'épreuve. Un gel présente un comportement intermédiaire entre un liquide et un solide.

Selon une caractéristique optionnelle de l'organe, l'antenne est encapsulée dans un matériau présentant une constante diélectrique comprise entre 1 et 5 (valeur absolue par rapport au vide). Un tel matériau permet de protéger l'antenne des agressions chimiques, notamment de celles provenant des produits utilisés pour l'entretien des jantes et pneumatiques, notamment dans le domaine du génie civil, et susceptibles d'être présents à l'intérieur du pneumatique.

L'invention a également pour objet un dispositif de mesure de pression **caractérisé en ce qu**'il comprend un organe de mesure de pression selon l'une quelconque des revendications 1 à 9 et un boîtier de protection de l'organe de mesure pression.

Le boîtier de protection permet de protéger l'organe, notamment la surface de mesure de pression des chocs et de certains débris solides, par exemple des cailloux.

Avantageusement, le dispositif comprend un support de positionnement de l'organe de mesure de pression dans le boîtier de protection, le boîtier de protection comprenant au moins une paroi de protection en regard de la surface de mesure de pression, le boîtier de protection et le support sont agencés de sorte que la surface de mesure de pression est positionnée à distance de la ou des parois de protection.

Aucune paroi du boîtier n'est au contact de la surface de mesure de pression. Le boîtier permet ainsi de s'assurer qu'aucune autre force que celle liée à la pression de l'air du pneumatique ne s'exercera sur la surface de mesure de pression.

Optionnellement, le boîtier de protection comprend des première et deuxième parties séparables l'une par rapport à l'autre et agencées de sorte qu'elles permettent une communication d'air entre l'extérieur et l'intérieur du boîtier de protection lorsqu'elles sont assemblées.

Le boîtier permet ainsi à l'air mis sous pression dans le pneumatique de pénétrer dans le boîtier de protection afin que la pression puisse être détectée par la surface de mesure de pression.

De préférence, le boîtier de protection comprend des moyens de filtration dimensionnelle de l'air entrant dans le boîtier de protection.

Ces moyens de filtration permettent de s'assurer que seuls les débris les plus petits présents dans le pneumatique peuvent rentrer en contact avec l'organe de mesure de pression. Compte tenu de leur faible taille, ils ne sont pas susceptibles de l'endommager, notamment la surface de mesure de pression.

Lorsqu'il est positionné dans le pneumatique, l'organe de mesure de pression subit les agressions des débris solides et liquides présents dans le pneumatique. En particulier, des débris peuvent venir au contact de la surface de mesure de pression et perturber la fiabilité de la mesure. Il est donc nécessaire de protéger l'organe de mesure de pression tout en permettant une mesure fiable de la pression du pneumatique.

Il est également décrit, mais non revendiqué, un boîtier de protection d'un organe de mesure de pression d'un pneumatique. Ce boîtier comprend:
- des première et deuxième parties mobiles l'une par rapport à l'autre entre une position d'insertion de l'organe dans le boîtier et une position de maintien de l'organe dans le boîtier, les première et deuxième parties étant agencées de sorte qu'elles permettent une communication d'air entre l'extérieur et l'intérieur du boîtier lorsqu'elles sont dans la position de maintien;
- des moyens de filtration de l'air entrant dans le boîtier comprenant un espace de passage de l'air entre l'extérieur et l'intérieur du boîtier défini par les première et deuxième parties,

- dans lequel l'espace de passage de l'air est défini au moins en partie par une jupe de recouvrement d'une paroi latérale d'une des première et deuxième parties.

Un tel boîtier permet de protéger à moindre coût et efficacement l'organe de mesure de pression. En effet, grâce à l'espace, l'air est filtré dimensionnellement, c'est-à-dire que seuls les liquides et les solides de taille inférieure à l'espace de passage peuvent pénétrer à l'intérieur du boîtier de protection. Le boîtier de protection permet ainsi de protéger la surface de mesure de pression des chocs et de certains débris solides.

En outre, le passage étant délimité par les première et deuxième parties, il n'est pas nécessaire de prévoir de passage de l'air propre à chacune des parties. Le passage est formé lors de l'assemblage du boîtier dans sa position de maintien de l'organe.

En outre, l'espace de passage permet de maintenir un passage de l'air entre l'intérieur et l'extérieur du boîtier de protection, même si l'espace de passage est bouché par des débris à quelques endroits isolés. En effet, il est très improbable que la totalité de l'espace de passage soit bouché si bien qu'il existe toujours un passage d'air entre l'intérieur et l'extérieur du boîtier permettant ainsi de mesurer correctement la pression du pneumatique.

De façon optionnelle, le boîtier comprend des moyens d'entretoisement entre les première et deuxième parties. Les moyens d'entretroisement permettent, dans la position de maintien, de définir l'espace de passage de l'air.

De préférence, l'espace de passage présente, en coupe, un profil général en forme de coude entre l'intérieur et l'extérieur du boîtier.

Avantageusement, la jupe de recouvrement présente un profil effilé. L'effilage de la jupe lui confère une relative souplesse qui permet à la jupe de se déformer sous l'effet des chocs et des vibrations lorsqu'on utilise le boîtier de protection. On permet ainsi l'évacuation de débris coincés dans l'espace de passage entre les première et deuxième parties ou bien ayant pénétré à l'intérieur du boîtier de protection.

De préférence, la jupe de recouvrement s'étend sur la totalité de la périphérie de la partie correspondante.

L'invention a encore pour objet un ensemble d'un pneumatique et d'un organe de mesure de pression, **caractérisé en ce que** l'organe de mesure de pression est tel que défini ci-dessus.

L'invention a encore pour objet un ensemble d'un pneumatique et d'un dispositif de mesure de pression, **caractérisé en ce que** le dispositif de mesure de pression est tel que défini ci-dessus.

L'invention sera mieux comprise à la lecture de la description qui va suivre, donnée uniquement à titre d'exemple non limitatif et faite en se référant aux dessins dans lesquels :
- la figure 1 illustre un dispositif de mesure de pression selon un premier mode de réalisation rapporté sur un pneumatique;
- la figure 2 est une vue en perspective du dispositif de la figure 1 ;
- la figure 3 est une vue éclatée en perspective du dispositif de la figure 2;
- la figure 4 est une vue en coupe du dispositif de la figure 2;
- les figures 5 et 6 sont des vues en perspective de première et deuxième parties d'un boîtier du dispositif des figures 1 à 4;
- la figure 7 est une vue en perspective d'un support du dispositif des figures 1 à 4;
- les figures 8 et 9 illustrent des moyens de solidarisation du boîtier de protection des figures 2 à 4 sur le pneumatique;
- la figure 10 est une vue en coupe d'un organe du dispositif des figures 3 et 4;
- les figures 11 et 12 sont des vues en perspective de l'organe de la figure 10;
- la figure 13 illustre un dispositif de mesure de pression selon un second mode de réalisation.

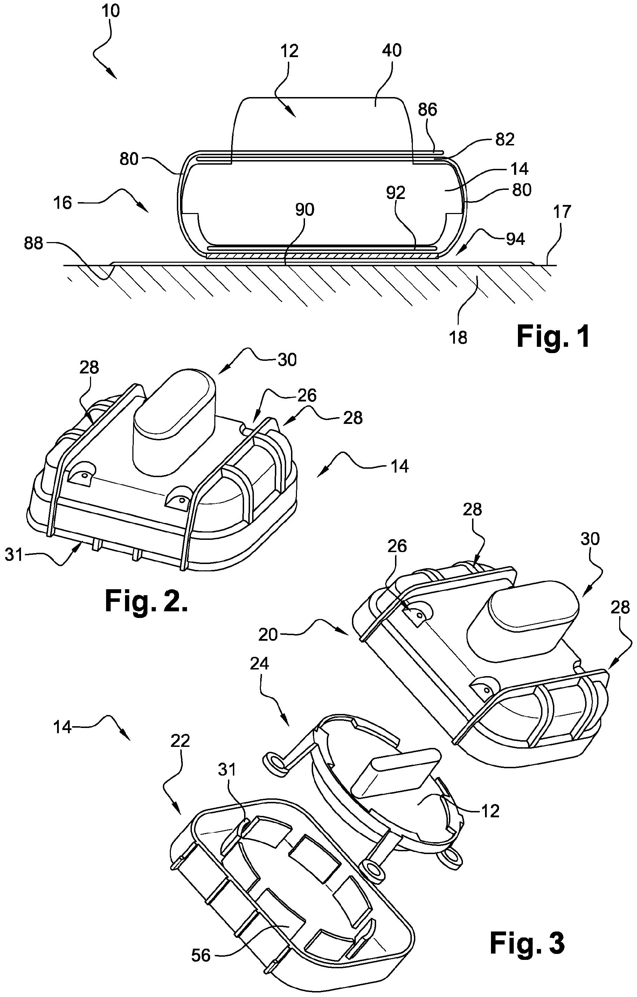

On a représenté sur la figure 1 un dispositif selon un premier mode de réalisation et désigné par la référence générale 10. Le dispositif 10 comprend un organe de mesure de pression 12 et un boîtier 14 de protection de l'organe de mesure 12. Le dispositif 10 comprend également des moyens 16 de solidarisation du boîtier de protection 14 sur une surface interne 17 d'un pneumatique 18. Le pneumatique 18 est utilisé pour des applications de génie civil.

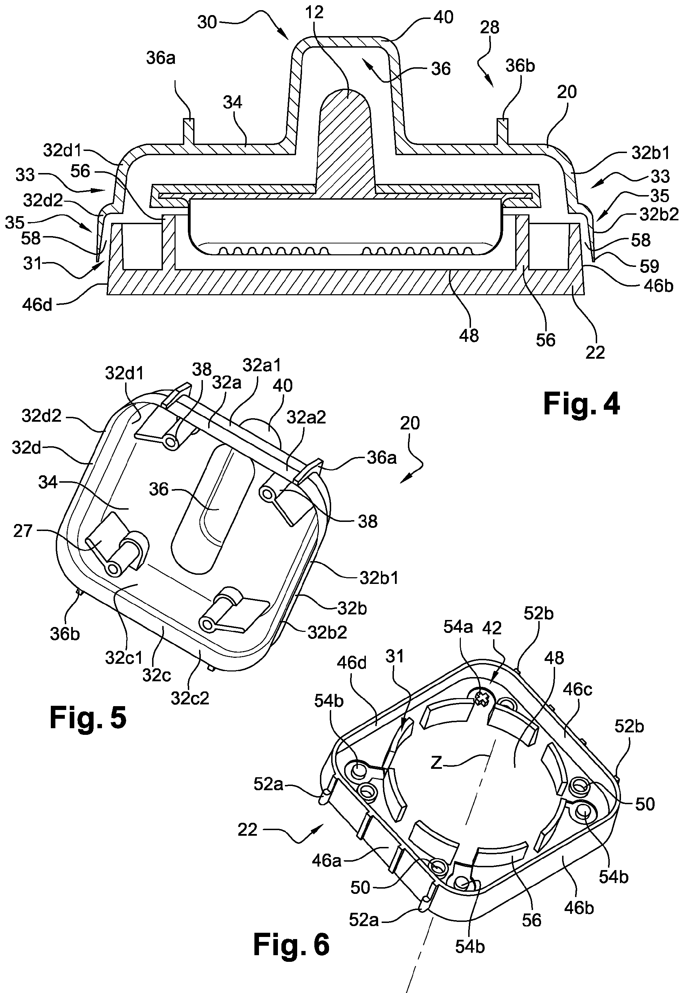

En référence aux figures 2 à 4, le boîtier de protection 14 comprend des première et deuxième parties 20, 22. Le dispositif 10 comprend un support 24 de positionnement de l'organe 12 dans le boîtier 14. Les parties 20, 22 sont mobiles, en l'espèce séparables, l'une par rapport à l'autre et agencées de sorte qu'elles permettent une communication d'air entre l'extérieur et l'intérieur du boîtier 14 lorsqu'elles sont assemblées, par exemple par un espace entre les deux parties 20, 22. Les parties 20, 22 sont mobiles l'une part rapport à l'autre entre une position d'insertion de l'organe 12 dans le boîtier 14 (figures 3, 5, 6) et une position de maintien de l'organe 12 dans le boîtier 14 (figures 2, 4). Le boîtier 14 présente une forme générale parallélépipédique. Le boîtier 14 comprend des moyens 26 de solidarisation des première et deuxième parties entre elles ainsi que des moyens d'entretoisement 27 des première et deuxième parties l'une par rapport à l'autre. Le boîtier 14 comprend des moyens 28 de guidage des moyens 16 et des moyens 30 d'accrochage des moyens 16. Enfin, le boîtier 14 comprend des moyens 31 de filtration dimensionnelle de l'air entrant dans le boîtier 14.

En référence aux figures 4 et 5, la première partie 20 présente une forme générale parallélépipédique et est délimitée par quatre parois de protection 32a-d parallèles deux à deux. Les parois 32a-d sont reliées par une paroi de protection 34 de fond. La paroi de fond 34 comporte un enfoncement 36 formant un logement. Chaque paroi 32a-d forme une jupe étagée 33 comportant une portion 32a1-d1 prolongée par une portion 30a2-d2 formant une jupe 35 de recouvrement de la deuxième partie 22. La jupe de recouvrement 35 s'étend sur la totalité de la périphérie de la première partie 20.

Les moyens de solidarisation 26 et d'entretoisement 27 de la première partie 20 comprennent des jambes 38 munies d'orifices traversants pour le passage de vis. Les moyens de guidage 28 de la première partie 20 comprennent deux nervures 36a-b reliant deux parois opposées 32a-c et passant par la paroi de fond 34 sur la face externe du boîtier 14. Les moyens 30 comprennent une excroissance 40 portée par la paroi 34 et complémentaire de l'enfoncement 36.

En référence à la figure 6, le dispositif 10 comprend des moyens 42 de positionnement du support 24. La deuxième partie 22 présente une forme générale parallélépipédique et est délimitée par quatre parois de protection 46a-d parallèles deux à deux. Les parois 46a-d sont reliées par une paroi de protection 48 de fond. Les parois 32a-d et 46a-d sont dépourvues d'arêtes saillantes de façon à ne pas altérer les moyens de solidarisation 26.

Les moyens de solidarisation 26 et d'entretoisement 27 de la deuxième partie 22 comprennent des orifices traversant 50 taraudés prolongeant les orifices 38 et permettant le verrouillage de vis. Les moyens de guidage 28 de la deuxième partie comprennent deux paires de nervures 52a-b. Les nervures 52a-b sont portées par deux parois 46a-c opposées et sont disposées dans le prolongement des nervures 36a-b. Les moyens de positionnement 42 comprennent des détrompeurs 54 portés par la paroi de fond 48. Les détrompeurs 54 comprennent des premier et deuxième types 54a, 54b de détrompeurs présentant respectivement une forme en croix et en rond. La paroi 48 porte un détrompeur 54a du premier type et trois détrompeurs 54b du deuxième type.

Les moyens de filtration dimensionnelle 31 comprennent des nervures 56 s'étendant perpendiculairement à la paroi 48 et portées par la paroi de fond 48. Les nervures 56 forment un cercle centré autour d'un axe Z et sont espacées angulairement les unes des autres. L'espacement angulaire entre les nervures 56 est constant et permet de limiter la taille des objets pouvant éventuellement pénétrer ou s'accumuler à l'intérieur du volume cylindrique délimité par les nervures 56. Les moyens 31 de filtrage dimensionnel comprennent également un espace 58 défini par les parties 20, 22. En l'espèce, l'espace 58 est défini par la jupe de recouvrement 35 formée par les portions 32a2-d2 et les parois latérales 46a-d lorsque les deux parties 20, 22 sont rapportées l'une à l'autre. Comme représenté sur la figure 4, l'espace 58 présente, en coupe, un profil général en forme de coude entre l'intérieur et l'extérieur du boîtier 14. La distance séparant les portions 32a2-d2 et les parois 46a-d est comprise entre 1 et 3 mm.

La jupe de recouvrement 35 comprend un bord périphérique d'extrémité 59. La jupe 35 présente un profil effilé. En d'autres termes, la jupe 35 présente une épaisseur variable diminuant lorsqu'on se déplace vers le bord 59.

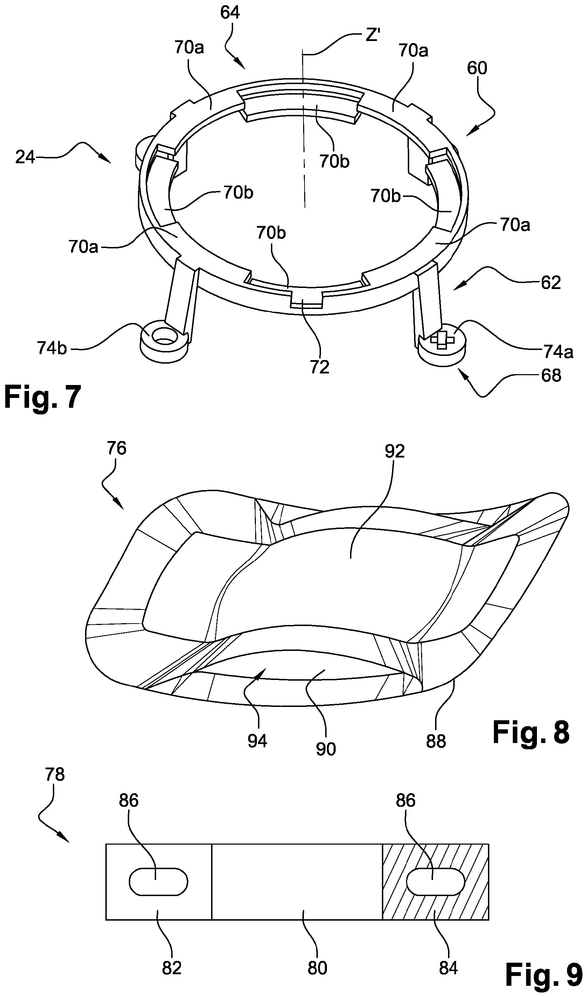

En référence à la figure 7, le support 24 comprend une partie 60 de forme générale circulaire centrée autour d'un axe Z' et des pieds 62, ici quatre, portant la partie 60 répartis régulièrement autour de la partie 60. Le dispositif 10 comprend des moyens 64 de maintien de l'organe 12 dans le support 24.

Les moyens de maintien 64 comprennent des premières et deuxièmes parois radiales 70a, 70b s'étendant circonférentiellement sur une largeur angulaire prédéterminée. Les parois 70a sont décalées axialement suivant l'axe Z' par rapport aux parois 70b. Les moyens 64 comprennent également une encoche 72 de positionnement de l'organe 12 par rapport au support 24.

Les moyens de positionnement 42 comprennent des détrompeurs 74, complémentaires des détrompeurs 54, portés par chaque pied 62. Les détrompeurs 74 comprennent des premier et deuxième types 74a, 74b de détrompeurs présentant respectivement une forme en croix et en rond. Un pied porte un détrompeur 74a du premier type et chaque autre pied porte un détrompeur 74b du deuxième type.

Le support 24 est réalisé en matière plastique, par exemple en fluorure de polyvinylidène. Cette matière est suffisamment souple pour permettre d'insérer l'organe 12 dans le support 24 par déformation élastique du support 24.

En référence aux figures 1, 8 et 9, les moyens de solidarisation 16 comprennent un patch 76 et une bande de maintien 78. La bande 78 comprend une portion élastique 80 reliant entre elles deux portions d'accrochage complémentaires 82, 84 de type crochets-velours connu sous la marque VELCRO. Chaque portion 82, 84 comprend également une ouverture 86 de maintien de la bande 78 présentant une forme et des dimensions sensiblement identiques à la forme et aux dimensions de l'excroissance 40.

Le patch 76 comprend une face 88 de solidarisation avec le pneumatique 18 et destinée à être collée contre la surface interne 17. Le patch 76 comprend également une face 90 et une bretelle 92 de solidarisation du patch 76 avec la bande 78. La face 90 et la bretelle 92 délimitent un espace 94 de passage de la bande 78.

Lors du montage du dispositif 10 sur le pneumatique 18, on fait passer la bande 78 dans l'espace 94. Puis, on dispose le boîtier 14 sur la bretelle 92. On fait passer la bande 78 entre les nervures 36a-b de guidage de la bande 78 et on insère l'excroissance 40 successivement dans chaque ouverture 86 comme représenté sur la figure 1.

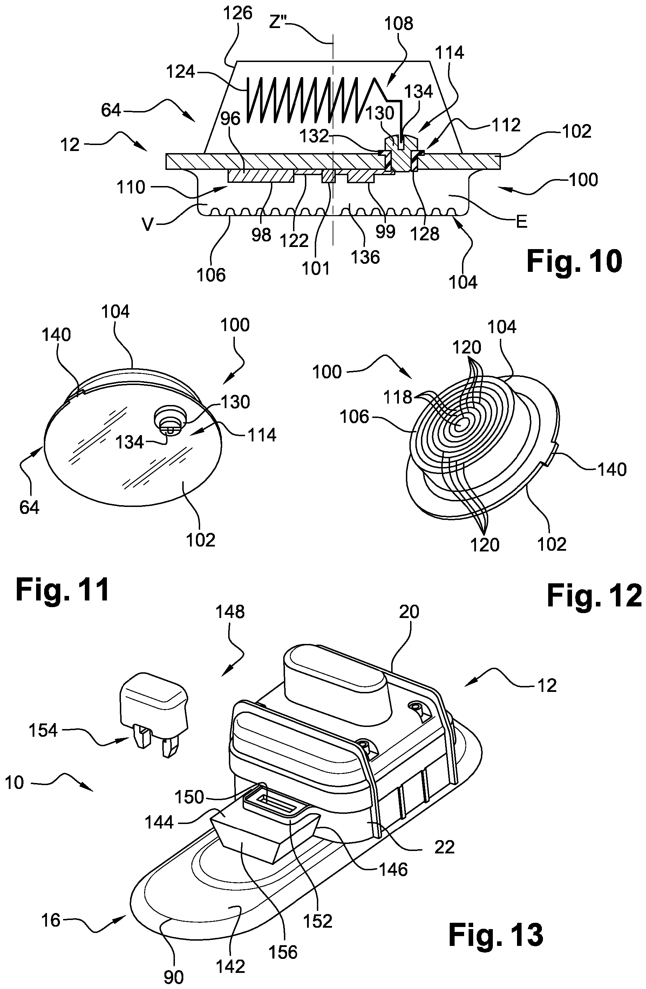

En référence aux figures 10 à 12, l'organe 12 présente une forme générale cylindrique de révolution autour d'un axe Z". L'organe 12 comprend un corps d'épreuve 96 portant une surface déformable 98 sensible à la pression. De façon classique, le corps d'épreuve 96 soumis à la pression à mesurer la transforme en une autre grandeur physique telle qu'une déformation, un déplacement, etc. En outre, l'organe 12 comprend des moyens de traitement 99 de la pression détectée par le corps d'épreuve 96. Les moyens 99 comprennent notamment un micro-contrôleur. Les moyens 99 sont sensibles à la grandeur physique et destinés à convertir cette grandeur détectée, par exemple en un signal électronique. L'organe 12 comprend également des moyens 101 de stockage d'énergie, en l'espèce une pile.

L'organe 12 comprend également un boîtier 100 étanche. Le boîtier 100 comprend un support 102 du corps d'épreuve 96 ainsi qu'une paroi déformable 104 formée par un diaphragme déformable portant une surface déformable 106 de mesure de pression. Le diaphragme 104 est rapporté sur le support 102 par soudure ou par collage. Le boîtier 100 délimite un espace interne E. Le corps d'épreuve 96 et les moyens 99, 101 sont agencés dans le boîtier 100.

En outre, l'organe 12 comprend des moyens 108 de communication par radiofréquences de données acquises par l'organe 12, notamment de la grandeur mesurée par le corps d'épreuve 96 et traitée par les moyens de traitement 99. L'organe 12 comprend des moyens 110 de transmission de la pression entre la surface de mesure de pression 106 du diaphragme 104 et la surface déformable 98 du corps d'épreuve 96. L'organe 12 comprend des moyens 112 de remplissage du boîtier 100 ainsi que des moyens 114 d'obturation des moyens de remplissage 112.

De préférence, le corps d'épreuve 96 comprend un élément du type à jauge de contrainte apte à transformer la déformation subie par la surface déformable 98 en un signal électrique à destination des moyens de traitement 99. En variante, le corps d'épreuve 96 comprend un élément de type piézo-électrique.

La surface 106 est liée fonctionnellement au corps d'épreuve 96, en l'espèce à la surface 98, de sorte que lorsqu'une pression est exercée sur la surface 106, cette pression est transmise au corps d'épreuve 96, en l'espèce à la surface 98.

A cet effet, les moyens de transmission 110 sont destinés à transmettre la pression exercée sur la surface de mesure de pression 106 à la surface déformable 98.

Le diaphragme 104 présente une forme générale sphéroïde aplatie à son sommet. Le diaphragme 104 comporte des portions circulaires concentriques 118 séparées entre elles par des rainures circulaires 120 concentriques. Les rainures 120 sont équidistantes les unes des autres deux à deux. Comme illustré sur les figures 4 et 10 la paroi 104 du boîtier étanche 100 présente, en coupe, au moins une portion présentant un profil sensiblement sinusoïdal.

Le diaphragme 104 est réalisé en acier inoxydable et la surface 106 est revêtue d'une pellicule métallique inerte, par exemple l'or, le palladium ou le platine.

Le support 102 forme une paroi du boîtier 100 et est réalisé en céramique. L'organe 12 comprend un circuit électronique 122 de pistes en cuivre gravées dans le support 102. Le support 102 porte les moyens de traitement 99 qui sont reliés au corps d'épreuve 96, aux moyens de transmission 108 et aux moyens de stockage d'énergie 101 par l'intermédiaire du circuit 122.

Les moyens de communication 108 comprennent une antenne 124 de type hélicoïdale. Ce type d'antenne permet d'obtenir un rayonnement relativement efficace dans un volume réduit. L'antenne 124 est située à l'extérieur de l'espace interne E. L'organe 12 comprend également un boîtier 126 de protection de l'antenne 124 dans lequel cette dernière est encapsulée. Le boîtier 126 est rapporté sur le boîtier 100, ici le support 102, et est réalisé dans un matériau présentant une constante diélectrique comprise entre 1 et 5, par exemple en polyuréthane thermodurcissable.

Les moyens de remplissage 112 comprennent un orifice 128 de remplissage du boîtier 100 ménagé dans le support 102. L'orifice 128 est obturé par les moyens d'obturation 114, en l'espèce par un organe 130 d'obturation vissé en force dans un filetage 132 porté par le support 102. L'organe 130 comporte un orifice 134 de maintien de l'antenne 124 et est réalisée dans un matériau conducteur électriquement afin de transmettre les signaux électriques depuis l'intérieur du boîtier 14 vers l'extérieur du boîtier 14. L'organe 130 est réalisé dans un matériau permettant la soudure de l'antenne 124 dans l'orifice 134. L'organe 130 est donc relié électriquement et mécaniquement à l'antenne 124. Le remplissage du boîtier 100 s'effectue par un produit en phase liquide, sous vide, à une température comprise entre 50°C et 80°C afin d'assurer une parfaite pénétration du produit dans la totalité de l'espace E, y compris les espaces situés entre les composants électroniques du circuit 122.

En variante, on remplit le boîtier 100 par un produit à une première température comprise entre 50°C et 80°C. Ce produit est réticulable. A cette température et durant cette étape de remplissage, le produit est dans une phase liquide. Le produit peut être mono-composant, bi-composants ou multi-composants. Ensuite, on laisse le produit réticuler à une deuxième température. Le produit forme alors un matériau dans une phase gel. En variante, on laisse le produit réticuler à la première température.

En fonctionnement, les moyens de transmission 110 comprennent un matériau sensiblement incompressible 136 occupant la totalité de l'espace interne E.

En l'espèce, le matériau incompressible 136 est dans une phase liquide et/ou gel dans une plage de températures comprise entre -20°C et +150°C. Le matériau 136 est diélectrique de sorte qu'il n'interfère pas électriquement avec les signaux électriques du circuit 122, notamment le corps d'épreuve 96 ou le détecteur 99. Dans le cas d'un liquide, le matériau est choisi parmi les huiles à base d'esters ou de glycérine. Dans le cas d'un gel, le matériau utilisé est connu sous la référence TSE 3062 fabriqué par la société MOMENTIVE.

Les moyens 64 comprennent une languette 140 de positionnement de l'organe 12. Cette languette 140 est complémentaire de l'encoche 72 du support 24.

En référence à la figure 4, la paroi de protection 48 est en regard de la surface 106. Le support 24 et le boîtier 14 sont agencés de sorte que la surface de mesure de pression 106 soit positionnée à distance de la paroi 48 du boîtier. En l'espèce, la hauteur du support 24, ici celle des parois radiales 70b, est supérieure à la hauteur du diaphragme 104. En position assemblée du dispositif 10, les axes Z, Z' et Z" sont sensiblement confondus. Les nervures 56 assurent également une fonction de butée du déplacement axial du support 24. En effet, les pieds 62 étant souples, ceux-ci peuvent se plier. Afin d'éviter que la surface de mesure de pression 106 ne touche la paroi 48, les nervures 56 limitent le déplacement axial du support 24 et donc du boîtier 100.

On a représenté sur la figure 13 un dispositif selon un deuxième mode de réalisation de l'invention. Les éléments analogues à ceux représentés sur les figures précédentes sont désignés par des références identiques.

Dans ce deuxième mode de réalisation, les moyens de solidarisation 16 comprennent un patch 142 portant une glissière de section trapézoïdale mâle 144 sur sa face 90. Les moyens 16 comprennent également une glissière de section trapézoïdale femelle 146 ménagée dans la deuxième partie 22. Le dispositif 10 selon le deuxième mode de réalisation comprend également des moyens 148 de verrouillage du boîtier 14 avec le patch 142. Les moyens de verrouillage 148 comprennent un orifice oblong 150 ménagé dans une oreille 152 portée par une des parois de la partie 22. Les moyens 148 comprennent également une paire 154 de crochets élastiques destinés à être insérés dans l'orifice 150 lorsque l'orifice 150 dépasse une paroi 156 de verrouillage de la glissière mâle 144.

L'invention ne se limite pas aux modes de réalisation précédemment décrits.

En particulier, on pourra exploiter un dispositif 14 avec d'autres moyens de liaison que ceux décrits dans les premier et deuxième modes de réalisation. On pourra également exploiter un organe 12 avec un autre boîtier de protection que celui décrits dans les premier et deuxième modes de réalisation.

On notera que l'on peut exploiter un boîtier de protection d'un organe de mesure de pression d'un pneumatique comprenant :
- des première et deuxième parties mobiles l'une par rapport à l'autre entre une position d'insertion de l'organe dans le boîtier et une position de maintien de l'organe dans le boîtier, les première et deuxième parties étant agencées de sorte qu'elles permettent une communication d'air entre l'extérieur et l'intérieur du boîtier lorsqu'elles sont dans la position de maintien;
- des moyens de filtration de l'air entrant dans le boîtier comprenant un espace de passage de l'air entre l'extérieur et l'intérieur du boîtier défini par les première et deuxième parties,
indépendamment du fait que l'organe de mesure de pression comprenne ou non:
- une surface de mesure de pression liée fonctionnellement à un corps d'épreuve,
- un boîtier étanche de mesure de pression dans lequel est agencé le corps d'épreuve, la surface de mesure de pression étant portée par une paroi du boîtier étanche de mesure de pression s'étendant à distance du corps d'épreuve, le boîtier étanche de mesure de pression délimitant un espace interne au boîtier;
- des moyens de transmission de la pression entre la surface de mesure de pression et le corps d'épreuve comprenant un matériau sensiblement incompressible occupant la totalité de l'espace interne;
- des moyens de stockage d'énergie et des moyens de traitement de la pression détectée par le corps d'épreuve agencés dans le boîtier étanche.

## Revendications

1. Organe (12) de mesure de pression comprenant:
- une surface (106) de mesure de pression liée fonctionnellement à un corps d'épreuve (96),
- un boîtier étanche (100) de mesure de pression dans lequel est agencé le corps d'épreuve (96), la surface (106) de mesure de pression étant portée par une paroi (104) du boîtier étanche (100) de mesure de pression s'étendant à distance du corps d'épreuve et déformable de sorte que la pression reçue par ladite paroi (104) à l'extérieur du boîtier est mesurable par le corps d'épreuve (96), le boîtier étanche (100) de mesure de pression délimitant un espace interne (E) au boîtier étanche (100);
- des moyens de transmission (110) de la pression entre la surface (106) de mesure de pression et le corps d'épreuve (96) comprenant un matériau (136) sensiblement incompressible occupant la totalité de l'espace interne (E);
- des moyens (101) de stockage d'énergie ; et
- des moyens (99) de traitement de la pression détectée par le corps d'épreuve (96) agencés dans le boîtier étanche (100);
**caractérisé en ce que** les moyens de stockage d'énergie sont agencés dans le boîtier étanche (100).

2. Organe (12) selon la revendication 1, comprenant des moyens (108) de communication par radiofréquences comprenant une antenne (124) située à l'extérieur de l'espace interne (E) occupé par le matériau (136).

3. Organe (12) selon la revendication 2, dans lequel le boîtier étanche (100) de mesure de pression comporte un orifice (128) de remplissage du boîtier (100) destiné à être obturé par un organe (114) d'obturation électriquement conducteur auquel est reliée l'antenne (124).

4. Organe (12) selon l'une quelconque des revendications précédentes, dans lequel la paroi (104) du boîtier étanche comporte des rainures concentriques (120).

5. Organe (12) selon la revendication 4, dans lequel les rainures concentriques (120) sont équidistantes les unes des autres deux à deux.

6. Organe (12) selon l'une quelconque des revendications précédentes, dans lequel la surface (106) de mesure de pression est revêtue d'une pellicule métallique inerte, par exemple l'or, le palladium ou le platine.

7. Organe (12) selon l'une quelconque des revendications précédentes, comprenant un support (102) du corps d'épreuve (96) formant une paroi du boîtier étanche (100), réalisé en céramique.

8. Organe (12) selon l'une quelconque des revendications précédentes, dans lequel le matériau (136) est dans une phase liquide et/ou gel dans une plage de températures comprise entre -20°C et +150°C.

9. Organe (12) selon la revendication précédente, dans lequel l'antenne (124) est encapsulée dans un matériau présentant une constante diélectrique comprise entre 1 et 5.

10. Dispositif (10) de mesure de pression **caractérisé en ce qu'**il comprend un organe (12) de mesure de pression selon l'une quelconque des revendications précédentes et un boîtier (14) de protection de l'organe (12) de mesure pression.

11. Dispositif (10) selon la revendication 10, comprenant un support (24) de positionnement de l'organe (12) de mesure de pression dans le boîtier (14) de protection, le boîtier (14) de protection comprenant au moins une paroi (48) de protection en regard de la surface (106) de mesure de pression, le boîtier (14) de protection et le support (24) sont agencés de sorte que la surface (106) de mesure de pression est positionnée à distance de la ou des parois (48) de protection.

12. Dispositif (10) selon la revendication 10 ou 11, dans lequel le boîtier (14) de protection comprend des première et deuxième parties (20, 22) séparables l'une par rapport à l'autre et agencées de sorte qu'elles permettent une communication d'air entre l'extérieur et l'intérieur du boîtier (14) de protection lorsqu'elles sont assemblées.

13. Dispositif (10) selon l'une quelconque des revendications 10 à 12, dans lequel le boîtier (14) de protection comprend des moyens (31) de filtration dimensionnelle de l'air entrant dans le boîtier (14) de protection.

14. Ensemble d'un pneumatique (18) et d'un organe (12) de mesure de pression, **caractérisé en ce que** l'organe (12) de mesure de pression est selon l'une quelconque des revendications 1 à 9.

15. Ensemble d'un pneumatique (18) et d'un dispositif (10) de mesure de pression, **caractérisé en ce que** le dispositif (10) de mesure de pression est selon l'une quelconque des revendications 10 à 13.

## Patentansprüche

1. Druckmesselement (12), umfassend:
- eine Druckmessfläche (106), die funktionell mit einem Prüfkörper (96) verbunden ist,
- ein dichtes Druckmessgehäuse (100), in dem der Prüfkörper (96) angeordnet ist, wobei die Druckmessfläche (106) von einer Wand (104) des dichten Druckmessgehäuses (100) getragen wird, die sich im Abstand von dem Prüfkörper erstreckt und verformbar ist, so dass der von der Wand (104) außerhalb des Gehäuses aufgenommene Druck von dem Prüfkörper (96) messbar ist, wobei das dichte Druckmessgehäuse (100) einen Innenraum (E) im dichten Gehäuse (100) begrenzt;
- Übertragungsmittel (110) zum Übertragen des Drucks zwischen der Druckmessfläche (106) und dem Prüfkörper (96), umfassend ein im Wesentlichen inkompressibles Material (136), das den gesamten Innenraum (E) einnimmt;
- Energiespeichermittel (101); und
- Verarbeitungsmittel (99) zum Verarbeiten des von dem Prüfkörper (96) detektierten Drucks, die in dem dichten Gehäuse (100) angeordnet sind;
**dadurch gekennzeichnet, dass** die Energiespeichermittel in dem dichten Gehäuse (100) angeordnet sind.

2. Element (12) nach Anspruch 1, umfassend Hochfrequenz-Kommunikationsmittel (108), die eine Antenne (124) umfassen, die außerhalb des Innenraums (E) gelegen ist, der von dem Material (136) eingenommen wird.

3. Element (12) nach Anspruch 2, wobei das dichte Druckmessgehäuse (100) eine Öffnung (128) zum Füllen des Gehäuses (100) umfasst, die dazu bestimmt ist, von einem elektrisch leitenden Verschlusselement (114) verschlossen zu werden, mit dem die Antenne (124) verbunden ist.

4. Element (12) nach einem der vorhergehenden Ansprüche, wobei die Wand (104) des dichten Gehäuses konzentrische Rillen (120) beinhaltet.

5. Element (12) nach Anspruch 4, wobei die konzentrischen Rillen (120) paarweise abstandsgleich zueinander sind.

6. Element (12) nach einem der vorhergehenden Ansprüche, wobei die Druckmessfläche (106) mit einem inerten Metallfilm, zum Beispiel Gold, Palladium oder Platin, überzogen ist.

7. Element (12) nach einem der vorhergehenden Ansprüche, umfassend einen Träger (102) des Prüfkörpers (96), der eine Wand des dichten Gehäuses (100) bildet und aus Keramik ausgeführt ist.

8. Element (12) nach einem der vorhergehenden Ansprüche, wobei das Material (136) in einem Temperaturbereich zwischen -20 °C und +150 °C in einer flüssigen und/oder gelförmigen Phase ist.

9. Element (12) nach dem vorhergehenden Anspruch, wobei die Antenne (124) in ein Material gekapselt ist, das eine dielektrische Konstante zwischen 1 und 5 aufweist.

10. Druckmessvorrichtung (10), **dadurch gekennzeichnet, dass** sie ein Druckmesselement (12) nach einem der vorhergehenden Ansprüche und ein Schutzgehäuse (14) zum Schutz des Druckmesselements (12) umfasst.

11. Vorrichtung (10) nach Anspruch 10, umfassend einen Träger (24) zur Positionierung des Druckmesselements (12) in dem Schutzgehäuse (14), wobei das Schutzgehäuse (14) mindestens eine Schutzwand (48) gegenüber der Druckmessfläche (106) umfasst, wobei das Schutzgehäuse (14) und der Träger (24) so angeordnet sind, dass die Druckmessfläche (106) im Abstand von der oder den Schutzwänden (48) positioniert ist.

12. Vorrichtung (10) nach Anspruch 10 oder 11, wobei das Schutzgehäuse (14) erste und zweite Teile (20, 22) umfasst, die voneinander trennbar sind und so angeordnet sind, dass sie eine Luftverbindung zwischen dem Außenraum und dem Innenraum des Schutzgehäuses (14) ermöglichen, wenn sie montiert sind.

13. Vorrichtung (10) nach einem der Ansprüche 10 bis 12, wobei das Schutzgehäuse (14) Mittel (31) zur größenmäßigen Filtration der in das Schutzgehäuse (14) eintretenden Luft umfasst.

14. Anordnung aus einem Reifen (18) und aus einem Druckmesselement (12), **dadurch gekennzeichnet, dass** das Druckmesselement (12) einem der Ansprüche 1 bis 9 entspricht.

15. Anordnung aus einem Reifen (18) und aus einer Druckmessvorrichtung (10), **dadurch gekennzeichnet, dass** die Druckmessvorrichtung (10) einem der Ansprüche 10 bis 13 entspricht.

## Claims

1. Pressure measuring member (12) comprising:
- a pressure-measuring surface (106) functionally connected to a test body (96),
- a sealed pressure-measuring housing (100) in which the test body (96) is arranged, the pressure-measuring surface (106) being supported by a wall (104) of the sealed pressure-measuring housing (100) extending at a distance from the test body and deformable in such a way that the pressure received by said wall (104) on the outside of the housing can be measured by the test body (96), the sealed pressure-measuring housing (100) delimiting a space (E) internal to the sealed housing (100) ;
- means (110) for transmitting the pressure between the pressure-measuring surface (106) and the test body (96) comprising a substantially incompressible material (136) occupying the entire internal space (E);
- energy storage means (101); and
- means (99) for processing the pressure detected by the test body (96) and arranged in the sealed housing (100) ;
**characterized in that** the energy storage means are arranged in the sealed housing (100).

2. Member (12) according to Claim 1, comprising radiofrequency communication means (108) comprising an antenna (124) located outside the internal space (E) occupied by the material (136).

3. Member (12) according to Claim 2, wherein the sealed pressure-measuring housing (100) comprises an orifice (128) for filling the housing (100) and intended to be closed by an electrically conductive closure member (114) to which the antenna (124) is connected.

4. Member (12) according to any one of the preceding claims, wherein the wall (104) of the sealed housing has concentric grooves (120).

5. Member (12) according to Claim 4, wherein pairs of concentric grooves (120) are equidistant from each other.

6. Member (12) according to any one of the preceding claims, wherein the pressure-measuring surface (106) is coated with a film of an inert metal, for example gold, palladium or platinum.

7. Member (12) according to any one of the preceding claims, comprising a support (102) for the test body (96) forming a wall of the sealed housing (100), made of ceramic.

8. Member (12) according to any one of the preceding claims, wherein the material (136) is in a liquid and/or gel phase in a temperature range comprised between -20°C and +150°C.

9. Member (12) according to the preceding claim, wherein the antenna (124) is encapsulated in a material having a dielectric constant of between 1 and 5.

10. Pressure-measuring device (10), **characterized in that** it comprises a pressure-measuring member (12) according to any one of the preceding claims and a housing (14) for protecting the pressure-measuring member (12).

11. Device (10) according to Claim 10, comprising a support (24) for positioning the pressure-measuring member (12) in the protective housing (14), the protective housing (14) comprising at least one protective wall (48) facing the pressure-measuring surface (106), the protective housing (14) and the support (24) being arranged such that the pressure-measuring surface (106) is positioned at a distance from the protective wall(s) (48).

12. Device (10) according to Claim 10 or 11, wherein the protective housing (14) comprises first and second portions (20, 22) that are separable from each other and arranged to allow air communication between the exterior and interior of the protective housing (14) when assembled.

13. Device (10) according to any one of Claims 10 to 12, wherein the protective housing (14) comprises means (31) for dimensionally filtering the air entering the protective housing (14).

14. Assembly of a tyre (18) and of a pressure-measuring member (12), **characterized in that** the pressure-measuring member (12) is according to any one of Claims 1 to 9.

15. Assembly of a tyre (18) and of a pressure-measuring device (10), **characterized in that** the pressure-measuring device (10) is according to any one of Claims 10 to 13.
